Europäisches Patentamt

European Patent Office

Office européen des brevets

(19)

(11) EP 1 298 675 A1

## (12) EUROPEAN PATENT APPLICATION

(43) Date of publication:
02.04.2003 Bulletin 2003/14

(51) Int Cl.7: **G21C 17/00**, B65G 51/04, G01T 7/08

(21) Application number: 01810949.6

(22) Date of filing: 28.09.2001

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(71) Applicant: **PAUL SCHERRER INSTITUT**<br>**5232 Villigen PSI (CH)** | (72) Inventor: **Güntay, Salih.**<br>**5417 Untersiggenthal (CH)**<br><br>(74) Representative: **Frei, Alexandra Sarah**<br>**Frei Patentanwaltsbüro**<br>**Postfach 768**<br>**8029 Zürich (CH)** |

(54) **Installation, sampling device and method for radioactivity measurement in a nuclear power plant**

(57) The invention comprises an installation, method and device for in-situ activity measurements of off-gas of nuclear power plants, e.g. during containment venting. The installation comprises a sampling device (37) that is transported in a pipe-post transport unit (34) to a sampling station (36), where sampling is performed. Sampling is performed with a suction device in such a way, that fission products in the off-gas are physically or chemically bound in special adsorber and/or filter means inside the sampling device. The exposed sampling device is transported back to a receiving station (31b). There, the sampling device is preferably received in a shielded container to be transported to a laboratory, where activity measurements can be performed. The installation, method and device is designed to meet very high safety standards that are combined with an easy operation.

Fig. 4

EP 1 298 675 A1

**Description**

FIELD OF THE INVENTION

The invention relates to an activity measurement installation, a measurement method and a sampling device for nuclear power plants. It especially relates to an installation, method and device for in-situ sampling of released activity to the environment during containment venting of nuclear power plants.

BACKGROUND OF THE INVENTION

In the event of a severe core damage accident in a nuclear power plant, it is desirable to contain all material which may possibly be active in the power plant. However, in all such accidents, the pressure in the containment might reach its design limit due to the generation of steam and various non-condensable gases, such as $H_2$, $CO_2$, CO, etc.. In order to avoid unduly great pressure increase, which might lead to catastrophic containment failure, most of the envisaged accident scenarios thus involve containment venting strategies. Such strategies have been implemented in severe accident management measures of nuclear power plants. Some of those containment venting strategies involve containment venting filters.

Of course, the activity of the released gases and other materials have to be monitored. Activity measurement systems are currently installed in stacks of power plants. They comprise aerosol monitors and gamma detectors and are designed for being active during normal power plant operation. However, they cannot be used during severe accidents, due to the expected very high level of radiation in the stack. Even if a containment venting filter system is in operation and activity in the stack is reduced due to fission product retention in the filter system, the remaining radiation level of the stack is still too high for the monitoring devices to work properly.

Accurate determination of released radioactivity to the environment during a containment venting is desired. This means characterisation of the chemical and physical form of fission products and their associated activities. Accurate determination of released radioactivity is needed to accurately calculate the source term necessary to predict the consequences of a severe accident in terms of extent of off-site land contamination as well as adsorbed dose by inhalation.

Known installations or systems for the determination of radioactivity during containment venting often include long sampling lines. This implicates non-quantifiable losses of activity in the lines, which causes an uncertainty in the measuring results. In sampling lines, small aerosols have a larger adsorption rate than larger aerosols, thus the measurement results become inaccurate. Correction of the measurement results by accounting for the losses by a scaling factor is thus not possible. Long sampling lines further include contamination risks due to possible leakage in the lines. In addition they often have very complicated and complex measuring and controlling systems.

One way to overcome contamination of long sampling lines and to reduce losses, is the external heating of the lines as described e.g. in the US patent US-5,267,282.

This publication discloses a monitoring device for stack exit air in a reactor installation. However, the above mentioned problems are not entirely solved by this approach. In addition, heating needs a heater connected to the lines, which is an additional component to be surveyed and provided with energy.

Many measurement concepts are based on the transport of the active material to a measurement station with the material e.g. suspended in a gas or suspended and dissolved in water. Such systems have several disadvantages. One is an undetermined loss in the transport lines due to adsorption and deposition. This loss jeopardises the quality of a measurement. Further, there is a high risk of contamination due to potential leaks or the altering of the gas or water, etc.. Also a sampling technique by filling an evacuated sampling device as described in the document EP 0 468 195 cannot prevent material loss due to adsorption on the device walls or due to leakage.

SUMMARY OF THE INVENTION.

It is therefore an object of the invention to overcome disadvantages of state of the art activity measurement installations and to provide a measurement installation, method and device for an accurate determination of activity of gas during a containment venting of nuclear power plants.

The object is achieved by the installation, method and device as defined in the claims.

The invention includes an in-situ activity measurement installation, measurement method and sampling device for sampling off-gas from a venting system in nuclear power plants. The measurement method is based on a passive gas sampling technique with a sampling device in the form of a capsule. The sampling device is transported from a loading station to a sampling station, preferably by a pneumatic tube post or pipe-post transport unit. There the device is exposed to sample gas of the off-gas duct or stack of a nuclear power plant. The sampling device contains adsorber and/or filter means containing special materials, e.g. physical or chemical filters and/or adsorbers. These adsorber and/or filter means can store ingredients or components of the sample gas, especially released fission products. The exposed sampling device is transported back to a receiving station, preferably by the same transport unit. There the device can be removed from the receiving station, to be transported to a laboratory for providing nuclide specific activity measurements. By measuring the filtered and/or adsorbed material, a representative results may be achieved.

In the activity measurement installation of the present invention no activity contamination outside an off-gas duct or stack of a power plant takes place. No transportation of active gas out of the off-gas duct or stack, except along a short sampling line typically in the order of a few ten centimeters, is performed. No activity loss, e.g. due to long sampling lines takes place, either. Distortion or alteration of measurement results are therefore prevented. Fission products such as radioactive nuclids, aerosols, etc. in the sample gas are kept back and stored in special adsorber and filter materials during the sampling procedure. Preferably, the fission products in gaseous and particulate forms are separated according to their chemical and physical characteristics. Therefore, gas and particles, chemically or physically bound, are kept in the sampling device. Loss due to leaks is excluded. The sampling device is preferably additionally shielded against radioactive radiation, e.g. by receiving the exposed sampling device in a shielded transport container so that also manual handling of the device is possible. The inner materials of a sampling device, i.e. mainly the filter and adsorber means, can be removed from the sampling device e.g. in a laboratory. This is preferably done by opening fasteners that can be included in a sampling device. The inner materials can then be analysed very specifically for a precise determination of the activity, e.g. by using gamma and beta spectrometers.

A sampling station is preferably directly connected to the off-gas duct or stack. The sampling device in a sampling station is provided with sample gas using a pressure difference between the outside and the inside of the sampling device, typically between an inlet and outlet of the sampling device. This pressure difference induces a sample gas flow into or through the sampling device and is preferably performed with a suction device. A suction device can be a flow induced suction device like e.g. a Venturi suction device. Such a flow induced suction device is located in the off-gas duct or stack, preferably downstream of a venting filter outlet. The sample gas is led along a part of a sampling line into a sampling device. The sampling line preferably contains a small pipe that leads from inside a stack or off-gas duct to an inlet side of the sampling device. According to a preferred embodiment of the sampling device, the sampling line includes another pipe that leads from an outlet side of the sampling device to the off-gas duct again. It is also possible to integrate a suction device into the sampling device itself. This can e.g. be done by providing a sampling device with a separate compartment that is at a predefined vacuum pressure. By opening an inlet valve at an inlet side of the sampling device, the sample gas is sucked into the device.

The accuracy of a measurement of sample gas, which provides not only qualitative information about the off-gas, like e.g. aerosol particles, organic and/or gaseous ($I_2$) molecular iodine, depends on various criteria and measurement parameters. Such criteria or parameters are e.g. sample gas flow rates, sampling duration, sampling volume, selection of filter or adsorber materials, efficiency of each material, thermal-hydraulic conditions in the stack, etc.. The aim of any embodiment of the measurement installation or method is to measure the exact nuclide specific activity of exposed units in order to be able to perform a precise activity determination in a stack. Measurement parameters needed to determine the exact activity in the stack are therefore measured and stored during sampling. This is done e.g. with appropriate measuring instruments comprising electronically controllable and storable components, e.g. pressure gauges, flow meters etc..

Transport means in the form of a pipe-post transport unit, are preferably provided with isolation and/or security valves, e.g. pneumatically or magnetically operated valves. In order to isolate loading, receiving and sampling station, they are preferably separated with isolation valves from the rest of the transport unit, the transport line and off-gas duct, respectively. Isolation valves at the sampling station allow the purging of the station before and after sampling. Valves also clearly separate those parts of the measurement installation that might directly get exposed to radioactive gas, e.g. like a sampling station, and those parts that should never get in contact with sampling gas. Another method to avoid contamination of at least most parts of a transport unit is to keep the transport line at a slightly higher pressure than the sampling device.

The loading station and the receiving station are preferably combined as one single station and located in the same room. The loading station is preferably provided with a stock of fresh, i. e. inactive, sampling devices. The receiving station is preferably provided with a set of receiving containers for exposed sampling devices. The loading of fresh devices into the transport line and the receiving of exposed devices is done manually or automatically, e. g. computer controlled. The stations are preferably installed in a shielded section of a control room together with a control unit for the whole measurement installation. The stations and control unit are both preferably accessible and safe from any activity contamination even during an emergency situation in the power plant.

A sampling device contains an outer shell or sheathing like a capsule, enclosing material that is able to selectively sample ingredients of sampled gas. These are e.g. released fission products in the off-gas of a nuclear power plant, i.e. released activity in particulate and gaseous form. The inner materials act as filters and/or adsorbers for e.g. aerosol particles, iodine, steam, etc.. and preferably have a layered arrangement. Aerosol filters can be made with glass fibre constructions or with electropolished stainless steel wire meshes. Glass fibres are known as high efficiency aerosol filters due to their ability to capture very large, e.g. 2 μm, to very small aerosol particles, e.g. <0.1 μm. An other advantage of glass fibre based filter materials is that gaseous iodine deposition in the material is reduced. Adsorber materials for gaseous molecular iodine are e.g. silicid acid based beads that are impregnated with potassium iodine (KI) or a silver-nitrogen-compound ($AgNO_3$). As organic iodide filters typically activated charcoal impregnated with KI or KI and triethylene-diamine (TEDA) is used.

According to one embodiment, the sampling device is formed as a longish capsule and includes at least one isolation valve, which is located at an end region of the capsule. Through this isolation or inlet valve the sample gas gets into the sampling device. Depending on the way of executing a sampling procedure, the sampling device has two valves, an inlet and an outlet valve. The two valves are preferably located on opposite regions of the sampling device. The valves at or in the sampling device preferably stay closed except during sampling. The form of a sampling device and the materials enclosed therein may vary according to design preferences and/or technological progress and improvement.

The activity measurement installation and sampling device is preferably independent of the energy supply of a power plant and its pressurised air supply system. This can e.g. be realized by using a pipe-post transport unit and valves that are operated by pressurised air from pressurised air bottles. Any electronic supply for the measurement installation, e.g. for an operation control unit or valve control, can be provided by a battery or an independent generator. The capacities of the supply system are therefore preferably designed to allow continuous operation for a sufficiently long operational time.

The activity measurement installation is designed to perform under special conditions, e.g. those common in off-gas ducts of nuclear power plants. In a preferred embodiment the installation and parts thereof are optimised to work under elevated temperatures, e.g. from 40-150°C, typically in a range of 50-120°C, under high humidity, up to 100% and be resistant to shock, vibration, especially earthquakes. They are further able to sample submicron aerosol particle sizes, low to extreme low aerosol and gaseous fission product concentrations, gaseous fission products like $I_2$, $CH_3I$ and active particulates consisting of a variety of fission product nuclides. The measurement installation is further adapted to international standards for sampling and safety techniques. This is e.g. realised with a programmable logic controller based operation control of the installation, the shielding of a sampling device, shielding of the whole installation, low failure rate in operation etc..

The measurement installation is also built and designed for easy operation and maintenance. Preferably, simple and robust components are used so that basically no part will be damaged and needs to be replaced. The components are preferably small, simple and compact, which also simplifies the controlling. Performance of a sampling of the off-gas is preferably largely automatic and computer controlled, e.g. with a programmable logic controller (PLC)-based operation control unit, while manual operation is also possible. Controlling is preferably designed to allow semi-continuous measurements at user defined intervals. In a process control unit concept, which was developed, a control unit can automatically control and verify the functions of a measurement installation, status of the air pressure, battery level, and make measurement cycles using dedicated capsules. The control unit preferably displays alerts if any component is malfunctioning. With such a control unit no special operator training is necessary. Even untrained persons can operate the control unit without taking risks neither to themselves, e.g. by radioactive radiation, nor to the measurement installation or any components thereof due to inappropriate handling.

An example of a process control unit concept that was developed comprises a programmable logic controller and a process control unit, interfaces and a touch screen. The touch screen of a process unit displays a visualization of the measurement installation with information on e.g.

- location of the sampling capsule,

- what operation the installation is performing, time parameters e.g. how long a process should take and the elapsed time for that process,

- which sampling capsule is in use, which ones are already used, which is e.g. done with colour coding,

- key measured variables,

- a 'start' button to be touched to initiate a new measurement cycle, if the cycle is in progress, the button is e.g. latched to 'in progress'.

The special design of the measurement installation and its components make it possible that the measurement method, installation and parts of the installation and its concepts are easily adaptable to any nuclear power plant installation based on the specifications defined by the plant operators.

Although the measurement installation and the installation concept or parts thereof are optimised for activity measurements in venting ducts of nuclear power pants, the application range is not limited thereto. The concept may also be used or the installation installed in facilities of a different nature, where gas samples are needed and a sampling location is hardly accessible or no personnel is available or should be endangered. Such a facility might e.g. be chemical reactors, mines or any installation where toxic fumes are developed.

In the following an exemplary description of a measurement installation and method for an accurate determination of released activity including

a) in-situ sampling to avoid non-quantifiable loss of aerosol and iodine species in long sampling lines and

b) determination of actual values of the flow in the stack or in the off-gas lines as well as the sample flow, according to the present invention

is presented. In-situ sampling is achieved by:

1. transporting a sampling capsule through a pipe-post unit from a loading/receiving station, to a sampling station installed on the stack or off-gas line. The loading/receiving station is preferably easily accessible by plant personal during a severe accident,

2. docking the inlet side of the sampling capsule to a sampling line,

3. allowing the sample gas flow into or through the sampling capsule for certain time duration,

4. purging the noble gases from the sampling capsule,

5. purging the sampling station to eliminate any gaseous activity,

6. reducing pressure in the sampling capsule below atmospheric pressure to avoid any leakage from the capsule, i.e. no loss of mass and associated activity,

7. back transport of the sampling capsule to the loading/receiving station,

8. purging the pipe-post unit as a redundancy to eliminate any possibility of contamination,

9. repetition of the steps "1" to "8" for a new sampling cycle,

10. activity measurement of the sampling capsule 'internals' i.e. filter and adsorber materials are done separately, e.g. by using gamma and beta spectrometers,

11. determination of the point values of released activity in the stack or off-gas line at the sampling times by extrapolating the measured activities by the ratio of integral flow in the stack or off-gas line to the total sample flow during the sampling duration. The total released activity is then calculated using the measured flow rate in the stack or off-gas line and the point values of the measured released activity. The accuracy of the total released activity depends on the number of measurements, which is not limited by the measurement installation design itself.

It is apparent that one or the other step of the above exemplified sampling procedure might be repeated, varied or ignored according to user's needs.

The sample gas flow is preferably drawn by a Venturi device mounted in the off-gas line. Depending on the Venturi dimensions and the total flow rate, a local pressure differential of e.g. up to several hundred mbar is achieved between the Venturi throat and the off-gas line. Pressure differences range from about 4mbar to 1000mbar and are typically in a range of 6 to 600mbar. If the throat is connected with a pipe to any position in the off-gas line far away from the Venturi location, a certain amount of flow is created in this connection piping due to the pressure differential across the pipe. The passive feature of this concept relies on the Venturi-generated flow. Since a measurement installation is only in use or needed when gas flows in the off-gas line, the Venturi creates the necessary sample flow without the need for any external energy.

In some applications a sample gas flow can also be drawn by a jet-pump if it is not possible to introduce a Venturi device. The small amount of pressurized air needed to drive a jet pump can be supplied from a pressurized air battery. If e.g. a capsule with incorporated vacuum is used, a sampling is preferably combined with a flow measuring instrument in the off-gas line or stack.

BRIEF DESCRIPTION OF THE DRAWINGS

In the following exemplified embodiments of the measurement installation, method and sampling device according to the present invention and of embodiments thereof are described in more detail in connection with the attached figures, wherein

Fig. 1 schematically shows an exemplified sampling concept of a measurement installation according to the present invention,

Fig. 2 is a schematic drawing of an embodiment of a gas sampling concept for a measurement installation according to the present invention,

Fig. 3 shows a schematic cross section of a sampling device according to the present invention to be used e.g. in the sampling concept of fig. 2,

Fig. 4 is a schematic overview of a measurement installation according to the present invention,

Fig. 5 shows a view of a simplified arrangement of a measurement installation according to the present invention,

Fig. 6 shows a more detailed view of an arrangement of a measurement installation with an enlarged view of a sampling station according to the present invention,

Fig. 7 shows a loading and receiving station,

Fig. 8 shows a detail of the transport line seen in Fig. 6,

Fig. 9 is a detailed drawing of a sampling station, and

Fig. 10 shows an embodiment of a sampling device according to the present invention.

DESCRIPTION OF THE PREFERRED EMBODIMENTS

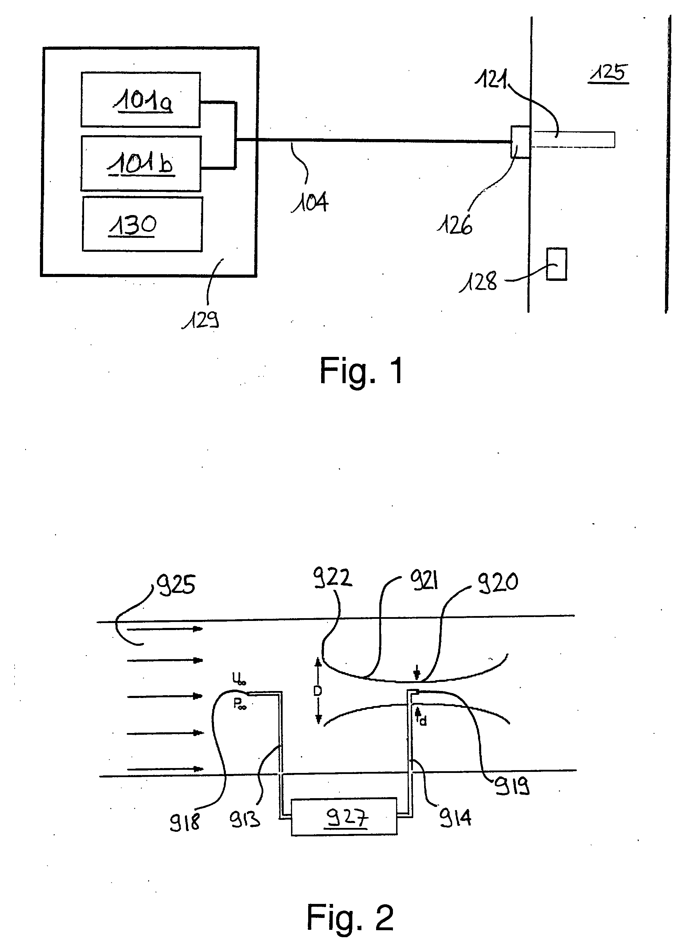

**Figure 1** schematically shows a sampling concept of the measurement installation according to the present invention. An inactive fresh sampling device, i.e. a sampling capsule, is transported from a loading station 101a to a sampling station 126. The transport is preferably done by a pipe-post transport unit 104. The sampling station 126 is mounted on the down-stream side of a venting filter outlet 128 of an off-gas duct or stack 125 of a nuclear power plant and directly attached to the off-gas duct or stack 125. A sampling device in the sampling station 126 is provided with gas from the stack. This is preferably done by a sucking device 121, e.g. Venturi head, which generates sufficient gas flow into or through the sampling device. When the sampling is completed, the exposed sampling device is transported back to a receiving station 101b in the same transport unit 104. The sampling station 126 is preferably purged after sampling and the exposed sample is preferably received in a shielded transport container to allow for manual handling of the container. A process control unit 130, e.g. containing a programmable logic controller (PLC)-based controller unit, for operation and valve control, is placed in a separate control room 129 together with the loading and receiving station 101a, 101b. On a display of the control unit 130, preferably the status of the installation, functions and location of the sampling device can be observed or be influenced, respectively. The control unit 130 and any other devices of the measurement installation are preferably independent of the power sources of the power plant, i.e. no AC/DC power supply or plant pressurised air system is needed. DC-power for the controller unit 130 may be provided by a battery and the air for the pipe-post transport unit and the pneumatic valves may be provided by pressurised air bottles.
Figure 2 shows schematically a gas sampling arrangement, which is based on a passive sampling technique. Therefore no external energy is required to provide a sampling device 927 with sample gas. A specially designed Venturi suction head 921 creates a reduced pressure at its throat by accelerating the gas flowing in a stack or off-gas duct 925. The sampling arrangement is composed of mainly four parts: an inlet leg 913, a sampling station 927, an outlet leg 914 and a Venturi suction head 921. The inlet leg 913 contains one or more sampling nozzles 918 to sample at preferably isokinetic conditions. The Venturi suction head 921 is installed in the stack 925 on the downstream side of a containment venting filter outlet. The Venturi 921 accelerates the off-gas in the stack in order to cause a lower pressure in the throat 920 or the outlet opening 919 of the outlet leg 914, respectively. The induced pressure difference between inlet opening 918 and outlet opening 919 causes the gas to flow along a sampling line, i.e. to flow through the legs, the sampling station and therefore through a sampling device in the sampling station.

The equation describing a pressure difference $\Delta p$ can be approximated as follows:

$$\Delta p = p_\infty - p = \left( \frac{\rho_\infty \cdot v_\infty{}^2}{2} \right) \cdot \left( \left( \left( \frac{D}{d} \right) \right)^4 - 1 \right),$$

wherein $p_\infty$, $v_\infty$, and $\rho_\infty$ are the upstream pressure, velocity and density in the stack, while D and d are the diameters of the Venturi 921 at the inlet 922 and the throat 920. Pressure drops $\Delta p$ from e.g. a few mbar to several hundred mbar are achieved. Length and diameter of the legs 913, 914 and the Venturi sizes D, d are optimised to minimise the pressure drop in the legs. Since the condition in every power plant is different, only a few examples for sizes or values shall be given here. For optimal operation they need to be optimised for every power plant condition. Diameters of inlet and outlet legs 913, 914 are typically a few millimetres, e.g. 4-15 mm, where 8 mm is considered as an optimal diameter. Another parameter is the sampling line length. The sampling line is as short as possible to avoid loss of fission products in the legs due to plate out and/or adsorption. Calculations show, that loss in lines of a length of up to about 200 cm is insignificant under the foreseen operational conditions. In the measurement installation according to the present invention sampling line lengths are usually smaller. Typical values are a few ten cm, e.g. 20-100 cm, but can be in the range or larger according to the users needs.

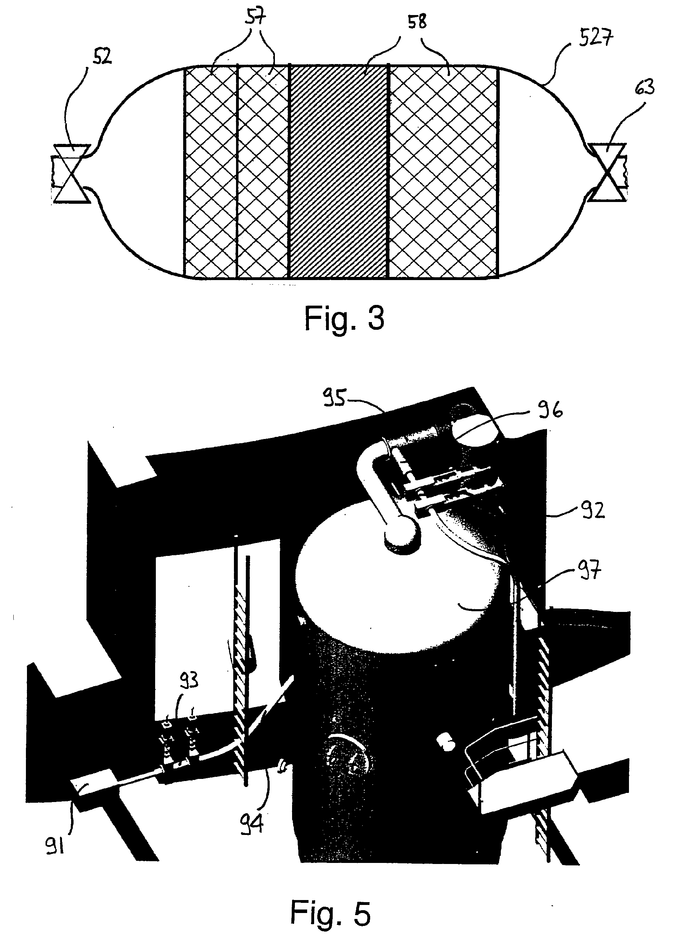

Figure 3 is a schematic cross section of a sampling device according to the present invention and e.g. to be used in the sampling concept of fig. 2. The sampling device is formed as a longish capsule 527 with an inlet valve 52 and an outlet valve 63 for passing gas through the capsule 527 from an inlet line to an outlet line. The length of the sampling capsule 527 is typically 10-35 cm, preferably 20 cm. Inside the capsule 527 are adsorber and filter means, containing various special materials that serve as filters and adsorbers. The materials are arranged in a layered construction. Two first stages 57 can serve as aerosol filters for different particle size ranges of particles e.g. <10 $\mu$m. The first stage is for bulk filtration and the second for the complete filtration. Aerosol filters are preferably containing glass fibres, stainless steel wire meshes or any other suitable aerosol filtering material. The aerosol filters stages 57 are followed by iodine adsorber stages 58, e.g. a gaseous molecular iodine bed and an organic iodide bed. The adsorber material for gaseous molecular iodine, e.g. $I_2$, is preferably KI or AgNO3 impregnated silicid acid based beads. KI or KI and triethylene-diamine (TEDA) impregnated activated charcoal is preferably used as organic iodide adsorber material. It is obvious that the number of stages and their function can vary and be adapted to user's needs. E.g. a moisture absorber can be a stage before the organic iodide adsorber bed or be integrated in it. This will remove high humidity as well as some fraction of the organic iodide. Moisture absorbers are e.g. zeolite compounds like silver zeolite or a molecular sieve. The main purpose of moisture absorbers is to avoid a built-up of any water film especially on the iodine adsorbers for organic iodide. A variable number of aerosol stages 57 and iodine adsorber stages 58 is preferably arranged in series. Also further stages with different materials may precede, intermediate or follow the named stages to filter any other gaseous radionuclids, e.g. noble gases, out of the off-gas.

The capsule 527 is preferably adequately made tight against leaking activity, e.g. with an appropriate valve mechanism and final internal sub-atmospheric pressure, in a way that no special transport requirements are needed.

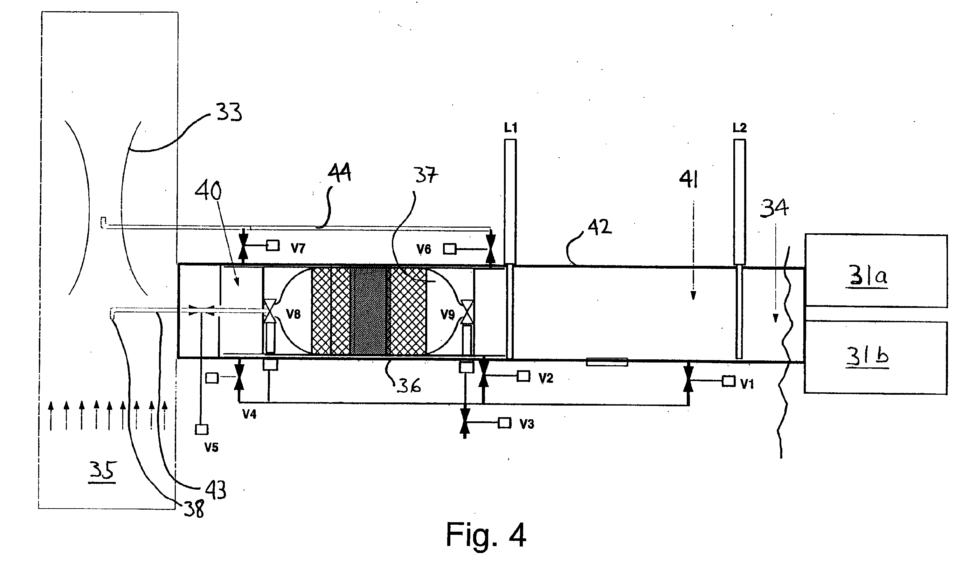

**Figure 4** shows schematically an overview of a measurement installation. There is also an enlarged view of the sampling station region 36 and a possible valve distribution for optimal transport, sampling, cleaning and safety. This means an efficient transport, docking and latching of a sampling device, a possible purging of the sampling station and transport line, no contamination of the transport line, low electric power consumption, etc..

A fresh inactive sampling device is transported in a pipe-post transport line 34 from a loading station 31a to a transport port 42. This transport port 42 is located next to the sampling station 36 and can be isolated with two isolation valves L1, L2, e.g. pneumatically operated valves. The two valves L1, L2 are operated to enable the docking of a capsule 37 in the sampling station 36 and to enable the latching of the capsule 37 to the sampling line. Closing of the first valve L1 isolates the upstream volume 41 and keeps it at pressure to dock the capsule 36. The pressure in the transport line, including transport port 42, preferably stays at a slightly higher pressure than the sampling station. This ensures that no activity will be transported back into the transport port 42 or transport line 34. Several other valves V1, V2, V4, V6, V7, e.g. pneumatic ball valves, are activated to pressurise the upstream 41 or downstream 40 volume to dock the capsule 37 in the sampling station (V1), to ship the capsule back to the transport unit (V4) and to purge the upstream 40 or downstream 42 volume, e.g. to decontaminate (V2, V4, V6, V7). In addition, one of those valves, a sixth valve V6, connects the upstream volume 40 to the sampling outlet leg 44 and a seventh valve V7 connects the downstream volume 42 to the outlet leg 44. An open sixth valve V6 together with a closed first valve L1 allows a sample gas flow to be sucked from the capsule 37. An open seventh valve V7 may release air from the transport unit into the stack 35. Preferably an additional fifth valve V5 isolates the sampling inlet leg 43 from the capsule 37. The capsule 37 has an inlet V8 and an outlet V9 valve, which are located at both of the capsules 37 ends and initiate a sample flow through the capsule 37. Preferably, an additional third valve V3, e.g. a ball valve connected to the outlet valve of the capsule, activates the inlet and outlet valves V8, V9 as soon as a control signal reports the secure latching of the capsule 37 in the sampling station 36. Sampling flow through the capsule starts as soon as the fifth valve V5, the inlet V8 and outlet valve V9 and the sixth valve V6 are in an open position. This is due to the pressure difference between inlet leg 43 and outlet leg 44 of the sampling line. This pressure difference is caused by a Venturi suction device 33, which is located in a stack venting duct and which is next to the sampling station 36 to avoid long sampling lines. After sampling is complete, the capsule is isolated by closing its two valves V8, V9. Preferably after purging the sampling station from contamination, a pressurised upstream volume ships the capsule back into the transport port 42. The capsule is transported back in the transport unit 34 to a receiving station 31b e.g. by pressurising the transport port 42.

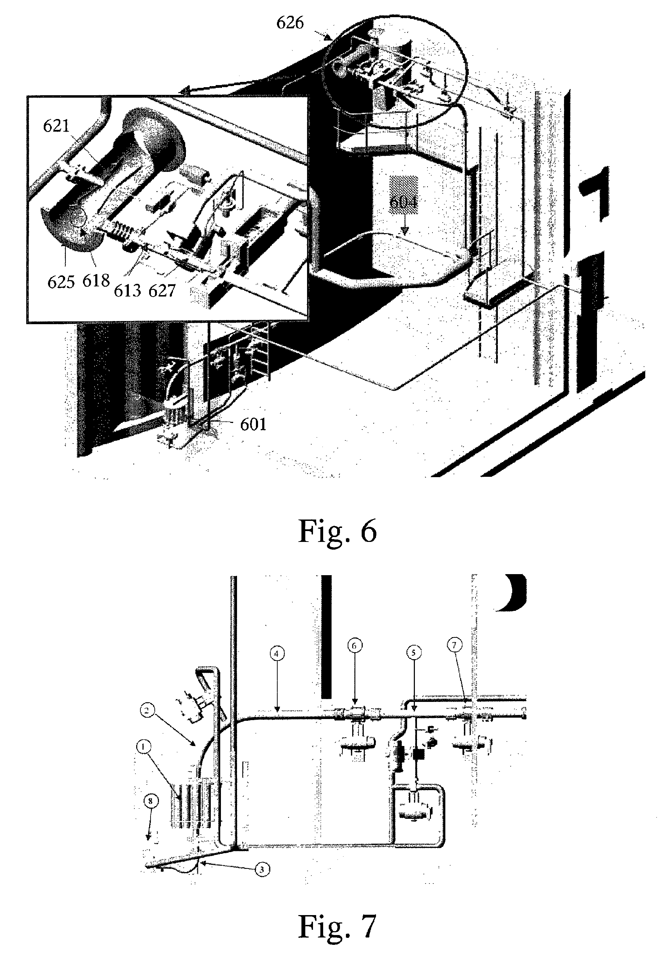

**Figure 5** shows a simplified semiplan view of components of a measurement installation. A fresh sampling device is transported from the loading station 91 via a pipe-post transport unit to the sampling station 96. The sampling station 96 is located at the downstream side of a containment venting outlet of a nuclear power plant 97 venting duct 95. Two transport ports 92, 93 isolate the transport line 94 from the rest of the transport unit. This allows for a precisely controlled transporting of a sampling device and prevents the line from contamination. The transport ports 92, 93 are preferably located at each end of the transport line 94, a first one next to the loading/receiving station 91 and a second one next to the sampling station 96. All parameters needed to extrapolate the released activity, e.g. flow through the sample, flow in the duct, gas temperature and humidity are measured and stored during sampling, preferably with suitable measuring instruments. After sampling, a sampling device is transported back to the receiving station 91, where it is received in a shielded transport container for further handling.

**Figure 6** is a similar view of a measurement installation as shown in figure 5. The loading/receiving station 601 is a circularly arranged magazine for storing fresh and exposed sampling capsules 627. Preferably a lead wall with certain height surrounds the magazine to achieve a very low personal dose rate, i.e. under allowable limit. A pipe-post unit 604 is designed to transport the sampling capsule 627 from a loading/receiving station 601 to a sampling station 626. An enlarged cut-open view of the sampling station 626 together with a part of the off-gas line 625 of a venting duct is shown in more detail in the insert. A sampling capsule 627 in the sampling station 626 is latched to a sampling line 613. The sampling point 618 is located either in the downstream piping, i.e. off gas line 625, of a containment venting filter outlet or in the stack of a nuclear power plant. During sampling, a certain amount of sample gas is sucked off via the sampling line 613 and flows through the sampling capsule 627. The activity in particulate and gaseous form, e.g. aerosol and molecular and organic iodide are adsorbed and filtered in the capsule. A Venturi suction device 621 that is located in the off gas line 625 creates a local sub-atmospheric pressure in its throat to draw the sample flow from the sampling point 618 through the sampling capsule 627. For applications where installation of a Venturi device is not possible, the sample gas can also be drawn by means of a jet-pump. The total flow and steam fraction in the off-gas line 625 or in the stack and the sample flow will be continuously measured in order to determine the released activity in the off-gas line or in the stack. This determination is done by extrapolating the nuclide specific activities determined by measuring the internals of the sampling capsule 627.

The installation is preferably autonomous and independent of any energy source from the nuclear power plant. This can be achieved by electrical batteries and pressurised air bottles, which will be designed to allow continuous operation for a sufficiently long operational time.

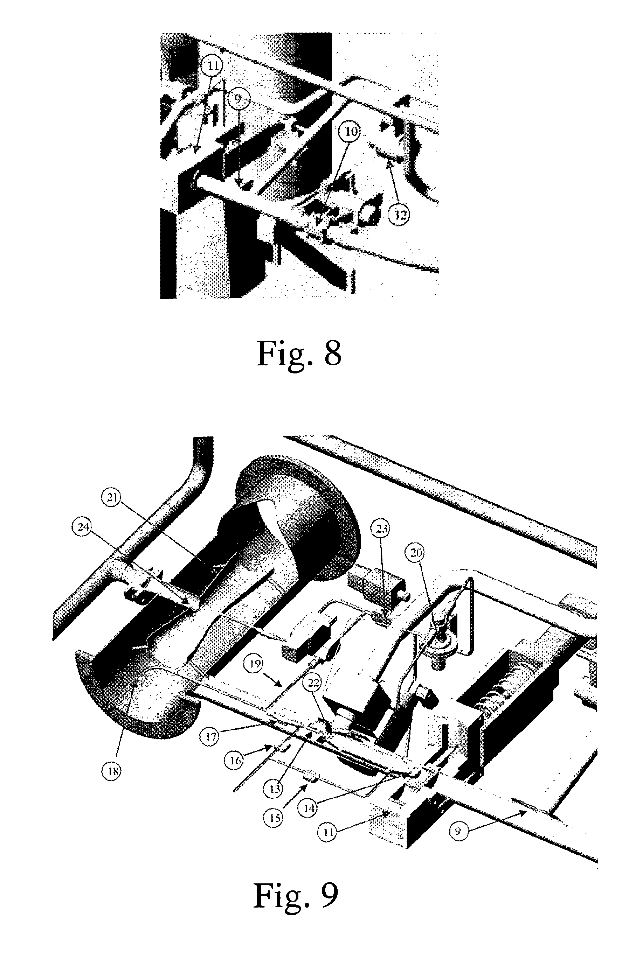

**In figure 7** a combined loading/receiving station in the form of a revolver type magazine set 1, each containing a sampling capsule, is shown. If a measurement installation is actuated, one magazine will be aligned with the pressurised air connection pipe 3 at the bottom and the inlet pipe 2 of the pipe-post transport unit 4 at the top. Tight connections between both ends of each magazine and the pipe-post inlet pipe 4 or the pressurized air connection pipe 3, respectively, can e.g. be realized with seals. Two isolation valves 6, 7 of a first transport port 5 are initially closed and a first isolation valve 10 of a second transport port 9, seen in **figure 8**, is initially open, preferably without being actuated. A second isolation valve 11 of the second transport port 9, is directly neighbouring the sampling station and in a closed position. Just after the isolation valves 6, 7 of the first transport port 5 are opened, a valve 8 at the bottom of the sampling capsule is opened to introduce pressurised air. This pressure is slightly higher than atmospheric pressure. As the pressure develops in the lower section of the magazine, the sampling capsule lifts off and starts moving until it enters the second transport port 9. The location of the sampling capsule is preferably monitored, e.g. by light-sensors. Once the capsule is in the second transport port 9, it decelerates and comes to a stop while the pressure in the second transport port 9 is relieved with another valve 12. The first isolation valve 6 of the first transport port 5 and the first isolation valve 10 of the second transport port 9 are closed, while the second isolation valve 11 of the second transport port 9 in the downstream is opened to initiate the last part of the transport path.

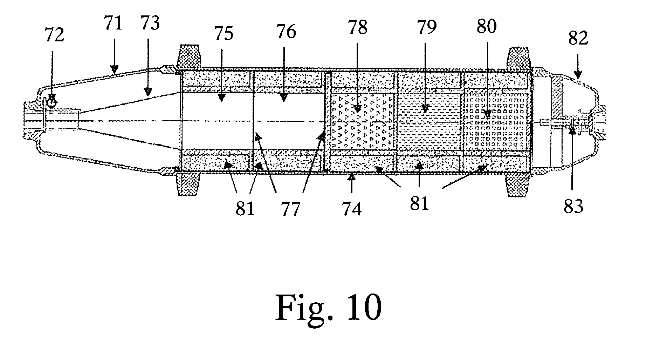

The air pressure in the second transport port 9 is increased to move the sampling capsule to the front until the docking with the sampling line 13 is achieved as can be seen in **figure 9**. Once a position signal by a sensor 22 indicates the completion of the initial phase of the docking, the second isolation valve 11 of the second transport port 9 is closed. This closing is followed by the movement of a central, e.g. pneumatic, cylinder 14. This central cylinder 14 opens an outlet valve in the sampling capsule, e.g. outlet side valve 83 in figure 10, and ensures a tight engagement of the capsule with the sampling line 13. The sampling line 13 is a small pipe with a diameter of about 8mm. The sampling capsule preferably stays latched in this position until the air pressure in the pneumatic cylinder is relieved.

An inlet valve, e.g. a spring loaded valve, at the inlet side of the sampling capsule is fully opened while the sampling capsule runs on the sampling pipe 13. The pipe 13 enters into the capsule by first opening the inlet valve. Once the sampling capsule is in place, which is the initial phase of the docking, the specially designed second isolation valve 11 of the transport port is closed. The cylinder 14, located at the centre of this second isolation valve 11, is then activated to move a piston into the sampling capsule to open the outlet valve of the capsule. At the same time the whole sampling unit is pushed forward to achieve tight engagement of the sampling capsule with the sampling line 13. This tight latching of the capsule with the sampling line 13 completes the docking phase.

The dimensions and form of the opening 18 of the sampling line 13 at the sampling point is preferably designed to facilitate isokinetic or near isokinetic sampling. Since the sample flow and the flow in the stack or off-gas line is measured, deviation from the isokinetic sampling should be corrected. The length of the line between the inlet opening 18 of the sampling line 13 and the inlet of the sampling capsule is short, preferably only a few tens cm to avoid any aerosol, iodine or other particle loss in the pipe. Before the initiation of the sampling, the gas flow is channelled through a by-pass line 19 in order to heat up a considerable portion of the sampling line with the hot gas flow from the stack.

The sample gas is directed through the sampling capsule by opening additional valves 17, 23 in the sampling line and the outlet leg and stopping the by-pass flow by closing a valve on the by-pass line 19. The Venturi device 21 is designed to create sub-atmospheric conditions in its throat 24 at any conditions in the off-gas line. In case a jet pump (not shown) is used, sub-atmospheric pressure will also be achieved. The absolute pressure drop between the upstream of the Venturi and the throat 24 provides the passive driving force for the gas to be sucked from the sample point 18 and to flow through the sampling capsule. A passive regulation means, e.g. a spring loaded pressure difference regulator 20, is foreseen to limit the pressure drop across the sampling capsule to a maximum designed value. This is necessary if the pressure drop becomes much higher than what is required for the optimum and safe operation of the sampling device. When the sampling is completed, the valve 17 in the inlet line is closed. In order to reduce the total activity to a minimum level, noble gases are driven out of the sampling capsule. This is done by opening a valve 16 in a second by-pass line, that is connected to the inlet line of the sampling station. The sampling and purge time durations are experimentally determined for a large variety of possible severe accident conditions. Once the purging of the sampling capsule is finished the valve 16 of the second by-pass line is closed. After that preferably purging of the sampling station is made to decontaminate the sampling station from the noble gases and other decontamination. This is done by opening a second valve 15 in the second by-pass line that opens the connection to the outlet side of the sampling station.

A final phase of the sampling is preferably done by lowering the pressure in the sampling capsule below atmospheric pressure. This is achieved by closing this second valve 15 of the second by-pass line and waiting a few tens of seconds before the valve 23 in the outlet leg is closed. The pressure in the sampling capsule is thus brought approximately to the level in the throat. Inlet and outlet valves of the sampling capsule are designed to keep sub-atmospheric pressure in the sampling capsule, e.g. ca. 40 mbar below atmosphere, for quite a long time. This is to avoid any activity release from the sampling capsule into the transport line or loading/receiving station until the capsules are transported to a laboratory for activity measurements.

In case of using a sampling capsule having only one inlet valve and a vacuum filled compartment that serves as suction device, the sampling is preferably stopped before a complete pressure equalisation has taken place. In this way no extra evacuation is needed to keep the capsule at a sub-atmospheric pressure.

In a next step of the sampling procedure the central pneumatic cylinder 14 is deactivated to withdraw the piston. The sampling capsule is disengaged from the latched position. The air pressure in the sampling station at the inlet side of the sampling capsule is increased until the sampling capsule arrives at and touches the first isolation valve 10 of the second transport port 9. After the sampling station and the second transport port 9 are purged by clean air, the second isolation valve 11 of the second transport port is closed and the first isolation valve 10 of the second transport port 9 is opened. By increasing the air pressure in the second transport port 9, the sampling capsule starts moving until it reaches and touches the first isolation valve 6 of the first transport port 5. At this moment, the first transport port 5 and the whole pipe-post piping is preferably purged with clean air in order to assure that no contamination can be transported into the magazine. The second isolation valve 7 of the first transport port 5 will be closed and followed by opening of its first isolation valve 6. The final stage of the sampling capsule in the transport line will then be initiated by increasing the air pressure in the first transport port 5 at the second isolation valve 7 side, until the sampling capsule passes the bend 2 in the transport line. The rest of the sampling capsule movement is driven by its weight and the counteracting air pollster at the bottom of the magazine.

Preferably the same connections designed for pressuring air attachments for the transport are also used to relief the air in the pipe-post unit. These two functions can e.g. be achieved by 3-way valves connecting the pressurized air system as well as the air relief system to the transport unit.

Upon the completion of a sampling cycle, the turn-table of the magazine will be turned by one position e.g.

by a process computer controlled pressurised-air-driven-mechanism until another magazine is aligned with the pipe-post inlet 2 at the top and the pressurized air connection 3 at the bottom. A process control unit then allows the operator to start a new sampling cycle or starts a already programmed new sampling cycle.

The air used for purging the transport unit or parts of it, e.g. the sampling station, as well as the sample gas, is preferably drawn directly into the neck of the Venturi device 24 or flowing into the stack.

Preferably all the cylinders for the valve movements are pneumatic valves and/or spring-loaded. They are preferably assigned with a certain position, i.e. open or closed, if the actuator air pressure is relieved. The positions are preferably selected such that the sampling capsule will never be blocked in the installation. The actuation of air pressure for the valves can be done by dedicated solenoid valves running on 24 VDC. The capacities of pressured air battery and 24 V DC battery of an uninterrupted electrical energy source are e.g. designed to feed the installation with air and electricity. Whereby the capacities are such to perform all the sampling cycles to exposure of all the sampling capsules in a loading/receiving station for a desired duration.

**Figure 10** is a detailed cross section of an embodiment of a sampling capsule. The sampling capsule comprises a removable inlet header 71 and outlet header 82 housing with an inlet side valve 72 and an outlet side valve 83, respectively. An inlet diffuser 73 spreads incoming gas to at least a major part of the cross section of a housing 74 for aerosol filter stages 75, 76 and iodine absorption stages 78, 79, 80. The two stages 75, 76 for aerosol particle capture include two aerosol filters 77. One first iodine absorber stage 78 is for molecular iodine adsorption, one second stage 79 for organic iodide adsorption. One or more stages 80 are e.g. for back-up molecular-organic iodide or other unplanned non-design applications.

The aerosol and iodine stages 75, 76, 78, 79, 80 in this embodiment are made up of two concentric cylinders. A space 81 between the outer and the inner cylinders is filled with a moisture absorber material to reduce steam condensation and keep the contents of the inner cylinders, e.g. the organic iodide adsorber material, dry. The inner cylinder walls are made of porous material, e. g. sintered metal or porous glass, to allow for gas permeability. The inner cylinders of the aerosol stages 75, 76 are preferably empty. The aerosol filter, e.g. glass filter 77, is mounted at one side of the stage, which is preferably supported by a cross-form stiffener. The inner cylinders of the iodine 78, 79 and possibly additional stages 80 contain special but typically commercially available materials to adsorb only molecular iodine or only organic iodide. The adsorber material in the stage 79 for the organic iodide adsorption is preferably additionally mixed with a moister absorber material.

The inlet valve 72 of the sampling capsule, e.g. a spring loaded valve, is fully opened while the sampling capsule runs on a sampling line, e.g. a pipe. The sampling line pipe enters into the capsule by first opening the inlet valve 72. A second mechanism opens the outlet valve 82 to allow a sample gas flow through the sampling capsule for a predefined time duration.

The sampling capsule design as well as the whole measurement installation was verified and its characteristics were established under prototypical conditions obtained within a comprehensive experimental program.

As shown in preferred embodiments the invention is designed and/or relates to:

- an accurate activity measurement installation which facilitates sampling directly in a stack or in an off-gas line, i. e. in-situ sampling,

- accurate determination of nuclide specific activities of all the fission products in a stack or in an off-gas line,

- determination of the physical form, particulate or gaseous, of all the released fission products,

- separate determination of molecular iodine and organic iodides,

- uninterrupted availability and passive technology for functionality, e.g. no energy requirement from the nuclear power plant,

- being a robust installation completely independent from the rest of the power plant installations,

- simplicity of operation, which does not require any trained personal,

- low-cost operation and easy maintenance,

- no contamination possibility in the areas accessible to plant operators,

- extremely low personal dose exposure.

**Claims**

1.  Installation for in-situ activity and/or composition measurements of off-gas of nuclear or chemical plants comprising a sampling device (37,527,627) for sampling part of the off-gas as sampling gas, a sampling station (36, 96,126, 927) for being located in the or adjacent to the off-gas, a receiving station (31b,91,101b,601), and transport means (4,34,94,104,604) for transporting the sampling device between the sampling station and the receiving station **characterised in that**
    the sampling device (37,527,627) contains adsorber and/or filter means (57,58,77,78,79,80,81) for physically or chemically binding ingredients of the sampling gas.

2.  Installation according to claim 1, **characterised in that** the adsorber and/or filter means comprise at least one aerosol filter (57,77).

3.  Installation according to claim 1 or 2, **characterised in that** the adsorber and/or filter means comprise at least one iodine adsorber (58,78,79).

4.  Installation according to any one of the previous claims, **characterised in that** the adsorber and/or filter means comprise at least one moisture absorber (78,81).

5.  Installation according to any one of the previous claims, **characterised in that** the sampling device is a capsule (37,527,627) with at least one inlet valve (V8, 52, 72).

6.  Installation according to claim 5, **characterised in that** the sampling capsule (37,527,627) further comprises an outlet valve (V9, 63, 83) for flow-through operation.

7.  Installation according to any one of the previous claims,
    **characterised in that**
    the transport means are formed as a pneumatic tube post unit (34,104,604).

8.  Installation according to any one of the previous claims,
    **characterised by**
    a suction device (21,33,121,621,921) for causing sampling gas to flow into the sampling device (37,527,627).

9.  Installation according to claim 8,
    **characterised in that**
    the suction device is a Venturi suction device (21,33,121,621,921) or a jet-pump.

10. Installation according to claim 8,
    **characterised in that**
    the suction device is a vacuum filled compartment in the sampling device.

11. Installation according to any one of the previous claims,
    **characterised in that** means for collecting sampling gas at a sampling point and directing it to the sampling device comprise a sampling line (13, 613).

12. Installation according to claim 11,
    **characterised in that** the sampling line (13, 613) has a maximum length of 100 cm.

13. Installation according to any one of the previous claims,
    **characterised by**
    purging means (V2,V4,V6,V7,15,16) for purging the installation or parts thereof from activity contamination.

14. Installation according to any one of the previous claims,
    **characterised by**
    energy and/or power supply means rendering the installation independent of any one energy and power supply of the power plant.

15. Installation according to claim14,

**characterised in that**

the energy and/or power supply means comprise pressurised air bottles and batteries.

16. Installation according to any one of the previous claims,
**characterised by**
a process control unit (130) for controlling the sampling process.

17. Installation according to claim 16,
**characterised in that**
the process control unit (130) comprises a programmable operation control unit and a valve control unit.

18. Installation according to claims 16 or 17,
**characterised in that**
the process control unit (130) permits manual and computer controlled operation of the installation or parts thereof.

19. Sampling device being a sampling capsule for use in the measurement installation according to any one of claims 1-18, comprising at least a closeable inlet (V8, 52, 72) for sampling gas and/or particles
**characterised by**
adsorber and/or filter means (57,58,77,78,79,80,81) for physically or chemically binding ingredients of the sampling gas.

20. Sampling device according to claim 19,
**characterised in that**
at least some of the adsorber and/or filter means (57,58,77,78,79,80,81) have a layered construction.

21. Sampling device according to claim 19 or 20,
**characterised in that**
at least one adsorber and/or filter means (57,58,77,78,79,80,81) is an iodine adsorber (58,78,79).

22. Sampling device according to claim 21,
**characterised in that**
the iodine adsorber contains impregnated silicid acid based beads, e.g. impregnated with potassium iodine (KI) or a silver compound for adsorbing gaseous molecular iodine (58,78).

23. Sampling device according to claim 21 or 22,
**characterised in that**
the iodine adsorber contains impregnated activated charcoal, e.g. impregnated with potassium iodine (KI) or triethylene-diamine (TEDA) for adsorbing organic iodide (58,79).

24. Sampling device according to any one of the claims 19 to 23,
**characterised in that**
at least one of the adsorber and/or filter means (57,58,77,78,79,80,81) is an aerosol filter (57,77), preferably containing glass fibres or stainless steel wire mesh.

25. Sampling device according to any one of the claims 19 to 24,
**characterised in that**
at least one of the adorber and/or filter means (57,58,77,78,79,80,81) is a moisture absorber (78,81).

26. Sampling device according to any one of the claims 19 to 25,
**characterised by**
at least one inlet valve (V8, 52, 72).

27. Sampling device according to any one of the claims 19 to 26,
**characterised by**
at least two valves, wherein one valve is an inlet valve (V8,52,72) and one valve is an outlet valve (V9,63,83).

28. Method for performing in-situ sampling of off-gas in a nuclear power plant comprising the steps of:

- transporting a sampling device (37,527,627) to a sampling station (36,126,927),

- performing sampling by letting sample gas flow into or through the sampling device (37,527,627), whereby ingredients of the gas are adsorbed or filtered inside the sampling device (37,527,627),

- transporting the exposed sampling device away from the sampling station and measuring activity and/or concentrations of adsorbed and/or filtered ingredients in the exposed sampling device.

29. Method according to claim 28,
**characterised in that**
a sample gas flow is caused by a pressure difference between the inside and the outside of the sampling device (37,527,627).

30. Method according to claim 29,
**characterised in that**
the pressure difference is caused by a Venturi suction device (21,33,121,621,921), a jet-pump or a vacuum filed compartment in the sampling device (37,527,627).

31. Method according to any one of the claims 28 to 30,
**characterised in that**
before and/or after sampling purging is performed to eliminate any one gaseous activity from the installation or parts thereof.

32. Method according to any one of the claim 28-31,
**characterised in that**
pressure in the sampling device (37,527,627) is reduced below atmospheric pressure to avoid any leakage from the sampling device (37,527,627).

Fig. 1

Fig. 2

Fig. 3

Fig. 5

Fig. 4

Fig. 6

Fig. 7

Fig. 8

Fig. 9

Fig. 10

**European Patent Office**

**EUROPEAN SEARCH REPORT**

Application Number

EP 01 81 0949

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 468 183 A (DEUTSCHE GESELLSCHAFT FÜR WIEDERAUFARBEITUNG VON KERNBRENNSTOFFEN MBH) 29 January 1992 (1992-01-29)<br><br>* the whole document * | 1-3,7,8, 10, 19-21, 24,28, 29,32 | G21C17/00<br>B65G51/04<br>G01T7/08 |
| X | PATENT ABSTRACTS OF JAPAN<br>vol. 005, no. 196,<br>12 December 1981 (1981-12-12)<br>& JP 56 119877 A (TOSHIBA CORP)<br>* abstract * | 1,7,<br>16-18 | |
| X | PATENT ABSTRACTS OF JAPAN<br>vol. 006, no. 221,<br>5 November 1982 (1982-11-05)<br>& JP 57 125374 A (TOKYO SHIBAURA DENKI KK)<br>* abstract * | 1,7,<br>16-18 | |
| X | US 4 742 009 A (BEVERLY ET AL.)<br>3 May 1988 (1988-05-03)<br>* the whole document * | 1,28 | |
| A,D | EP 0 468 195 A (DEUTSCHE GESELLSCHAFT FÜR WIEDERAUFARBEITUNG VON KERNBRENNSTOFFEN MBH) 29 January 1992 (1992-01-29)<br>* the whole document * | 1-32 | TECHNICAL FIELDS SEARCHED (Int.Cl.7)<br><br>G21C<br>B65G<br>G01T |
| A,D | US 5 267 282 A (LABNO ET AL.)<br>30 November 1993 (1993-11-30)<br>* the whole document * | 1-32 | |
| A | DE 44 09 354 A (KLÖCKNER-HUMBOLDT-DEUTZ AG) 21 September 1995 (1995-09-21)<br>* figure 1 * | 5,7,26 | |

The present search report has been drawn up for all claims

| Place of search | Date of completion of the search | Examiner |
|---|---|---|
| MUNICH | 20 March 2002 | Frisch, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 01 81 0949

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2002

| Patent document cited in search report | | | Publication date | Patent family member(s) | | Publication date |
|---|---|---|---|---|---|---|
| EP 468183 | A | | 29-01-1992 | DE 4023840 A1 | | 06-02-1992 |
| | | | | EP 0468183 A2 | | 29-01-1992 |
| | | | | JP 4262229 A | | 17-09-1992 |
| JP 56119877 | A | | 19-09-1981 | JP 1493767 C | | 20-04-1989 |
| | | | | JP 63041037 B | | 15-08-1988 |
| JP 57125374 | A | | 04-08-1982 | NONE | | |
| US 4742009 | A | | 03-05-1988 | NONE | | |
| EP 468195 | A | | 29-01-1992 | DE 4023841 A1 | | 06-02-1992 |
| | | | | EP 0468195 A1 | | 29-01-1992 |
| | | | | JP 4232896 A | | 21-08-1992 |
| US 5267282 | A | | 30-11-1993 | CH 682188 A5 | | 30-07-1993 |
| | | | | DE 59205076 D1 | | 29-02-1996 |
| | | | | EP 0523396 A1 | | 20-01-1993 |
| | | | | JP 5188177 A | | 30-07-1993 |
| | | | | RU 2070343 C1 | | 10-12-1996 |
| DE 4409354 | A | | 21-09-1995 | DE 4409354 A1 | | 21-09-1995 |

EPO FORM P0459

For more details about this annex : see Official Journal of the European Patent Office, No. 12/82